# EUROPÄISCHE PATENTANMELDUNG

(11) **EP 4 699 796 A1**
(43) Veröffentlichungstag der Anmeldung: **25.02.2026**
(21) Anmeldenummer: 25195267.7
(22) Anmeldetag: 12.08.2025
(51) Int. Cl.: B32B 1/08, B32B 7/12, B32B 27/08, B32B 27/32, B32B 27/34, F16L 11/04

(54) **ROHR ZUR FÜHRUNG VON REINIGUNGSFLÜSSIGKEITEN**

(30) Priorität: 20.08.2024 DE 102024123781
(71) Anmelder: TI Automotive (Fuldabrück) GmbH, 34277 Fuldabrück (DE)
(72) Erfinder: Arnold, Siegfried, 34128 Kassel (DE); Fahrenholz, Frank, 34128 Kassel (DE); Schramowski, Martin, 34134 Kassel (DE); Häckel, Andre, 34513 Waldeck (DE)
(74) Vertreter: Andrejewski - Honke Patent- und Rechtsanwälte Partnerschaft mbB

(57) **Zusammenfassung**

Ein Rohr (1) zur Führung einer Reinigungsflüssigkeit weist eine Rohrwand (2) auf, wobei die Rohrwand (2) ein Lumen (3) umschließt. Die Rohrwand (2) umfasst ein Polyamid und/oder ein Polyolefin.

## Beschreibung

Die Erfindung betrifft ein Rohr zur Führung einer Reinigungsflüssigkeit, wobei das Rohr eine Rohrwand aufweist, wobei die Rohrwand ein Lumen umschließt. Die Erfindung betrifft ferner eine Verwendung eines solchen Rohrs zum Transport einer Reinigungsflüssigkeit.

Ein derartiges Rohr zur Führung von Reinigungswasser ist aus CN117813222A bekannt. Das Rohr dient dem Transport des Reinigungswassers von einem Reservoir hin zu Sensoren (Kameras, Radarsensoren, Lidarsensoren) eines *Advanced Driver Assistance System* (ADAS). Dieses System wird beispielsweise für das teil- oder sogar vollautonome Fahren von Fahrzeugen genutzt, bei welchen eine auch nur temporäre Beeinträchtigung der Sensoren aufgrund von Verschmutzung nicht akzeptabel ist. Hierzu wird/werden bei Bedarf der Sensor bzw. die Sensoren mit der Reinigungsflüssigkeit besprüht, um dann den Sensor bzw. die Sensoren mit Druckluft von dem Reinigungsflüssigkeit-Schmutz-Gemisch zu befreien.

Das Rohr aus CN117813222A ist aus Polyurethan hergestellt und weist einen Innendurchmesser von 2mm und einen Außendurchmesser von 3mm auf. Nachteilig ist allerdings, dass die bekannten Rohre mit den Jahren degradieren und spröde sowie unter Umständen auch rissig werden können. Der Erfindung liegt daher die Aufgabe zugrunde, ein Rohr bereitzustellen, welches weniger mit der Zeit degradiert und beständiger gegenüber Reinigungsflüssigkeiten ist.

Diese Aufgabe wird gelöst durch ein Rohr zur Führung einer Reinigungsflüssigkeit, wobei das Rohr eine Rohrwand aufweist, wobei die Rohrwand ein Lumen umschließt, dadurch gekennzeichnet, dass die Rohrwand ein Polyamid und/oder ein Polyolefin umfasst.

Der Erfindung liegt zunächst die Erkenntnis zugrunde, dass die ADAS-Reinigungsflüssigkeiten nicht nur Wasser, sondern insbesondere auch eine Wirkkomponente in bevorzugter Form eines Lösungsmittels aufweisen können und Wasser-Lösungsmittel-Gemische zur Reinigung der Sensoren besonders bevorzugt sind. Es wurde gefunden, dass die ADAS-Reinigungsflüssigkeiten aufgrund des Lösungsmittels relativ aggressiv gegenüber den Rohren sind.

Der Erfindung liegt weiter die Erkenntnis zugrunde, dass die ADAS-Reinigungsflüssigkeiten die bekannten Rohre aus Polyurethan auswaschen können, wodurch diese Rohre spröde und unter Umständen rissig werden können. Es wurde gefunden, dass Polyamide und Polyolefine beständiger als Polyurethane gegenüber den ADAS-Reinigungsflüssigkeiten sind. Hierdurch werden die erfindungsgemäßen Rohre weniger schnell ausgewaschen bzw. spröde, wodurch die eingangs genannte Aufgabe gelöst wird.

Die Reinigungsflüssigkeit umfasst vorzugsweise Wasser. Mit Vorteil umfasst die Reinigungsflüssigkeit eine Wirkkomponente. Die Wirkkomponente ist bevorzugt ein Lösungsmittel, weiter bevorzugt ein Alkohol und beispielsweise Isopropanol und/oder Ethanol. Es ist sehr bevorzugt, dass die Reinigungsflüssigkeit ein Gemisch ist, wobei das Gemisch das Wasser und die Wirkkomponente umfasst.

Es ist besonders bevorzugt, dass die Reinigungsflüssigkeit für den Einsatz in einem ADAS eines Fahrzeugs ausgebildet ist. Es ist bevorzugt, dass das ADAS des Fahrzeugs das Rohr umfasst. Mit Vorteil umfasst das ADAS mehrere der Rohre. Es ist möglich, dass das ADAS Rohre zum Transport von Druckluft umfasst. Mit Vorteil ist das ADAS so ausgebildet, dass Sensoren des ADAS zunächst mit der Reinigungsflüssigkeit gereinigt und dann mit der Druckluft von der Reinigungsflüssigkeit bzw. dem Schmutz befreit werden.

Es ist möglich, dass das Rohr lediglich eine Schicht umfasst. Die lediglich eine Schicht weist vorzugsweise ein Polyamid, insbesondere ein aliphatisches Polyamid und besonders bevorzugt PA11 auf. Der Gewichtsanteil des Polyamids bzw. aliphatischen Polyamids bzw. PA11 an der lediglich einen Schicht beträgt vorzugsweise wenigstens 30 bzw. 50 bzw. 70 bzw. 90 %.

Polyamide bewirken, dass das Rohr eine gute Druckfestigkeit und chemische Beständigkeit gegenüber der Reinigungsflüssigkeit aufweist. Aliphatische Polyamide bewirken, dass der Kunststoff ein gutes Preis-Leistungsverhältnis gegenüber aromatischen Polyamiden aufweist. PA11 hat gegenüber anderen aliphatischen Polyamiden den Vorteil, dass es eine besonders gute chemische Beständigkeit gegenüber der ADAS-Reinigungsflüssigkeit aufweist. Außerdem besitzen Polyamide, vorzugsweise aliphatische Polyamide und insbesondere PA11 eine gute chemische Beständigkeit gegenüber anderen Fluiden im Automotive-Bereich, sodass Polyamide und insbesondere PA11 das Rohr nicht nur vor inneren, sondern insbesondere auch vor äußeren Einwirkungen schützen und im Ergebnis ein einschichtiges Rohr möglich ist.

Es ist ganz besonders bevorzugt, dass die Rohrwand eine innere Schicht umfasst, wobei vorzugsweise die innere Schicht das Polyamid bzw. das Polyolefin der Rohrwand aufweist. Die innere Schicht bewirkt, dass eine Schicht des Rohres bzw. der Rohrwand speziell auf das zu transportierenden Fluid abstimmbar ist, sodass die Eigenschaften des Rohres hinsichtlich des zu transportierenden Fluids auf die ADAS-Reinigungsflüssigkeiten optimiert werden können. Es ist sehr bevorzugt, dass die innere Schicht die innerste Schicht des Rohres ist. Die innere Schicht ist mit Vorteil maximal 0,6 bzw. 0,5 bzw. 0,4 bzw. 0,3 mm dick. Dies bewirkt eine sparsame Verwendung des anspruchsvollen Kunststoffs der inneren Schicht. Es ist bevorzugt, dass die innere Schicht eine Schichtdicke von wenigstens 0,05 bzw. 0,07 bzw. 0,08 mm aufweist. Dies bewirkt, dass eine durchgängige Ausbildung der Schicht bei der Koextrusion gewährleistet ist.

Der Begriff "Schicht" meint vorzugsweise einen im Querschnitt hohlen Körper, welcher vorzugsweise vollständig umlaufend ist. Der hohle Körper bzw. die Schicht ist bevorzugt integral ausgebildet. Der Begriff "integral" meint bevorzugt einen einstückigen Körper, welcher keine inneren, durchgängigen Grenzflächen aufweist. Der Ausdruck "innere durchgängige Grenzflächen" meint vorzugsweise solche inneren Grenzflächen, die einen Körper vollständig in wenigstens zwei Bereiche unterteilen, die keine Verbindung jenseits der Grenzflächen aufweisen. Beispielsweise die Grenzflächen der Schichten eines koextrudierten Rohrs sind durchgängige innere Grenzflächen.

Der Begriff "einstückig" meint vorzugsweise, dass der einstückige Körper nur in zerstörender Weise, beispielsweise durch Schneiden, in zwei oder mehr Stücke geteilt werden kann. Als Beispiel der Einstückigkeit mag ein Vorformling in Form eines Rohrs mit mehreren koextrudierten und stoffschlüssig verbundenen Schichten dienen, welches zwar einstückig, nicht aber über die gesamte Rohrwand hinweg integral ausgebildet ist.

Für die Herstellung eines integralen Körpers ist zweckmäßigerweise das Erzeugen des Körpers aus lediglich einer Schmelze eine notwendige, aber nicht hinreichende Bedingung. Hierfür ist zweckmäßigerweise ferner notwendig, dass der aus einer Schmelze hergestellte Körper nicht noch um weitere Körper dieser Schmelze ergänzt wird, welche wiederum innere Grenzflächen am Gesamtkörper erzeugen würden, so dass der Gesamtkörper nicht integral ausgebildet wäre.

Folglich ist ein mehrschichtiges, koextrudiertes Rohr schichtweise integral ausgebildet und insgesamt bzw. über die gesamte Rohrwand bzw. Vorformlingswand hinweg auch einstückig, nicht aber über die gesamte Rohrwand hinweg integral ausgebildet. Eine einzelne Schicht eines mehrschichtigen Rohrs hingegen ist entlang des Rohrs integral und insbesondere vollständig integral ausgebildet. Der Grund hierfür ist, dass jede der Schichten einer eigenen Schmelze zugeordnet und auch nicht durch Grenzflächen dazwischen getrennt ist. Die verschiedenen Schichten sind zweckmäßigerweise mikroskopisch oder durch andere Bildgebungsverfahren insbesondere an Grenzflächen zwischen den Schichten erkennbar. Der Begriff "integral" umfasst bevorzugt "schichtweise integral" ausgebildete Körper und "vollständig integral" ausgebildete Körper.

Es ist besonders bevorzugt, dass das Rohr einstückig ausgebildet ist. Mit Vorteil sind wenigstens zwei Schichten und vorzugsweise alle Schichten des Rohrs stoffschlüssig - insbesondere aufgrund der Koextrusion - miteinander verbunden. Es ist von besonderem Vorteil, dass alle Schichten des Rohrs mit der jeweils anliegenden Schicht bzw. den jeweils anliegenden Schichten stoffschlüssig verbunden sind. Es ist sehr bevorzugt, dass das Rohr mittels Extrusion bzw. Koextrusion hergestellt ist.

Es ist sehr von Vorteil, dass das Polyamid der Rohrwand bzw. der inneren Schicht ein aliphatisches Polyamid und insbesondere PA11 ist. Es ist vorteilhaft, dass die innere Schicht wenigstens 30 bzw. 50 bzw. 70 bzw. 90 Gew.-% Polyamid bzw. aliphatisches Polyamids bzw. PA11 umfasst. Polyamide bewirken, dass das Rohr eine gute Druckfestigkeit und chemische Beständigkeit gegenüber der Reinigungsflüssigkeit aufweist. Aliphatische Polyamide bewirken, dass der Kunststoff ein gutes Preis-Leistungsverhältnis gegenüber aromatischen Polyamiden aufweist. PA11 hat gegenüber anderen aliphatischen Polyamiden den Vorteil, dass es eine sehr gute chemische Beständigkeit bzw. Auswaschfestigkeit gegenüber der ADAS-Reinigungsflüssigkeit aufweist.

Es ist bevorzugt, dass das Polyolefin der Rohrwand bzw. der inneren Schicht ein Polypropylen, vorzugsweise ein Polyolefin-Homopolymer bzw. Polypropylen-Homopolymer ist. Dies bewirkt eine gute Beständigkeit gegenüber Wasser und gegenüber einer Wirkkomponente einer ADAS-Reinigungsflüssigkeit. Es ist möglich, dass das Polyolefin der Rohrwand bzw. der inneren Schicht ein Polypropylen-Copolymer ist. Insbesondere ist das Polyolefin, vorzugsweise das Polypropylen sehr auswaschfest - vergleichbar zu PA bzw. PA11 - gegenüber der ADAS-Reinigungsflüssigkeit. Außerdem bietet das Polyolefin bzw. Polypropylen eine relativ gute Schlagzähigkeit bei niedrigen Temperaturen. Es ist bevorzugt, dass die innere Schicht wenigstens 30 bzw. 50 bzw. 70 bzw. 90 Gew.-% Polyolefin bzw. Polypropylen bzw. Polyolefin-Homopolymer bzw. Polypropylen-Homopolymer bzw. Polypropylen-Copolymer aufweist. Es ist sehr von Vorteil, dass das Polyolefin bzw. Polypropylen bzw. Polyolefin-Homopolymer bzw. Polypropylen-Homopolymer der Rohrwand bzw. der inneren Schicht mit einer Elastomerkomponente, beispielsweise EPDM, gemischt ist. Dies erlaubt eine hohe Schlagzähigkeit.

Besonders vorzugsweise umfasst die Rohrwand eine äußere Schicht, wobei die äußere Schicht mit Vorteil ein Polyamid, vorzugsweise ein aliphatisches Polyamid und weiter vorzugsweise PA11 umfasst. So besitzen Polyamide, vorzugsweise aliphatische Polyamide und insbesondere PA11 eine gute chemische Beständigkeit gegenüber verschiedensten Fluiden im Automotive-Bereich, sodass Polyamide bzw. aliphatische Polyamide und insbesondere PA11 das Rohr auch vor äußeren Einwirkungen schützen. Zweckmäßigerweise umschließt die äußere Schicht die innere Schicht. Es ist möglich, dass die äußere Schicht an der inneren Schicht anliegt. Es ist möglich, dass zwischen der äußeren Schicht und der inneren Schicht eine weitere Schicht oder mehrere Schichten befindlich sind. Es ist bevorzugt, dass die äußere Schicht die äußerste Schicht des Rohres ist. Vorzugsweise umfasst die äußere Schicht wenigstens 20 bzw. 30 bzw. 50 bzw. 70 bzw. 90 Gew.-% Polyamid bzw. aliphatisches Polyamid bzw. PA11. Die äußere Schicht ist mit Vorteil höchstens 1,0 bzw. 0,9 bzw. 0,8 bzw. 0,7 bzw. 0,6 mm dick. Vorteilhafterweise beläuft sich die Schichtdicke der äußeren Schicht auf wenigstens 0,2 bzw. 0,5 bzw 1,0 bzw. 1,2 bzw. 1,4 bzw. 1,6 bzw. 1,8 mm. Dies bewirkt eine ausreichende Bereitstellung der von dem Material gewünschten chemischen und mechanischen Wirkungen.

Es ist möglich, dass das Rohr lediglich zwei Schichten umfasst. Die lediglich zwei Schichten werden vorzugsweise von der inneren Schicht und der äußeren Schicht gebildet. Es ist sehr bevorzugt, dass im Falle von lediglich zwei Schichten die innere Schicht das Polyolefin bzw. Polypropylen der Rohrwand aufweist.

Es ist von Vorteil, wenn das Rohr eine Trägerschicht aufweist, wobei die Trägerschicht bevorzugt ein Polyamid, insbesondere ein aliphatisches Polyamid und ganz besonders ein PA6 umfasst. Dies bewirkt eine gute Schlagzähigkeit bei niedrigen Temperaturen und eine gute Druckfestigkeit sowie außerdem eine gute Adhäsion an Polyamiden bzw. aliphatischen Polyamiden bzw. PA11. Gegenüber PA11 bietet PA6 einen Preisvorteil. Allerdings ist PA6 weniger chemisch beständig im Vergleich zu PA11 gegenüber ADAS-Reinigungsflüssigkeit sowie auch gegenüber anderen fluiden im Automotiv-Bereich. Diese Eigenschaften prädestinieren PA6 als Material für die Trägerschicht.

Es ist bevorzugt, dass die Trägerschicht die innere Schicht umschließt. Es ist möglich, dass die Trägerschicht an der inneren Schicht anliegt. Es ist möglich, dass eine weitere Schicht zwischen der Trägerschicht und inneren Schicht befindlich ist. Vorzugsweise umschließt die äußere Schicht die Trägerschicht. Mit Vorteil liegt die äußere Schicht an der Trägerschicht an. Hierdurch wird ein schichtenarmer bzw. einfach zu extrudierender Aufbau erreicht, der insbesondere ohne eine Haftvermittlerschicht zwischen Trägerschicht und innerer Schicht bzw. äußerer Schicht auskommt. Vorzugsweise umfasst die Trägerschicht wenigstens 30 bzw. 50 bzw. 70 bzw. 90 Gew.-% Polyamid bzw. aliphatisches Polyamid bzw. PA6. Vorteilhafterweise beläuft sich die Schichtdicke der Trägerschicht auf wenigstens 0,2 bzw. 0,3 bzw. 0,4 mm. Hierdurch wird eine verhältnismäßig dicke Schicht bereitgestellt, sodass die Trägerschicht einen großen Teil der mechanischen Funktionen der Rohrwand übernehmen kann und der Einsatz der anderen Kunststoffe sparsamer wird. Zweckmäßigerweise beläuft sich die Schichtdicke der Trägerschicht auf höchstens 1,5 bzw. 1,2 bzw. 1,0 bzw. 0,8 mm, da anderenfalls der Materialverbrauch zu groß würde und im Übrigen kaum Mehrwert erreicht würde.

Gemäß einer Ausführungsform weist das Rohr eine Barriereschicht auf, wobei die Barriereschicht bevorzugt ein Polyolefin und vorzugsweise ein Polypropylen umfasst. Es ist möglich, dass die Barriereschicht ein Polypropylen-Copolymer aufweist. Es ist sehr bevorzugt, dass das Polyolefin bzw. Polypropylen der Barriereschicht ein Homopolymer (Polyolefin-Homopolymer bzw. Polypropylen-Homopolymer) ist. Dies bewirkt eine gute Beständigkeit bzw. Auswaschfestigkeit gegenüber Wasser und Wirkkomponenten und insbesondere gegenüber ADAS-Reinigungsflüssigkeiten. Hierdurch wird eine gute Ergänzung der inneren Schicht hinsichtlich chemischer Beständigkeit bzw. Barrierewirkung gegenüber den ADAS-Reinigungsflüssigkeiten erzielt.

Mit Vorteil ist die Barriereschicht außerhalb der inneren Schicht angeordnet. Zweckmäßigerweise ist die Barriereschicht innerhalb der äußeren Schicht bzw. der Trägerschicht befindlich. Es ist bevorzugt, dass die Barriereschicht an der inneren Schicht bzw. der Trägerschicht anliegt. Es ist bevorzugt, dass zwischen der Barriereschicht und der äußeren Schicht eine weitere Schicht, insbesondere eine Haftvermittlerschicht, angeordnet ist. Es ist möglich, dass eine weitere Schicht, insbesondere eine Haftvermittlerschicht, zwischen der Barriereschicht und der inneren Schicht angeordnet ist. Die Barriereschicht umfasst mit Vorteil wenigstens 30 bzw. 50 bzw. 70 bzw. 90 Gew.-% Polyolefin bzw. Polyolefin-Homopolymer bzw. Polypropylen bzw. Polypropylen-Homopolymer bzw. Polypropylen-Copolymer. Mit Vorteil beläuft sich die Schichtdicke der Barriereschicht auf wenigstens 0,05 bzw. 0,07 bzw. 0,09 mm. Es ist bevorzugt, dass sich die Schichtdicke der Barriereschicht auf höchstens 0,5 bzw. 0,4 bzw. 0,3 bzw. 0,2 mm beläuft.

Die Barriereschicht weist sehr bevorzugt neben dem Polyolefin bzw. dem Polypropylen bzw. Polypropylen-Homopolymer ein Adhäsionsadditiv auf. Beispielsweise ist das Adhäsionsadditiv Maleinsäureanhydrid. Eine weitere vorteilhafte Wirkung der Polyolefine bzw. Polypropylene besteht in einer hohen Auswaschfestigkeit gegenüber alkoholischen Lösungen und damit auch gegenüber ADAS-Reinigungsflüssigkeiten mit alkoholischer Komponente.

Besonders vorzugsweise umfasst das Rohr eine innere Barriereschicht und eine äußere Barriereschicht. Mit Vorteil ist die innere Barriereschicht die Barriereschicht. Die innere Barriereschicht und/oder die äußere Barriereschicht weist/weisen bevorzugt ein Polyolefin und sehr bevorzugt ein Polypropylen auf. Die innere Barriereschicht und/oder äußere Barriereschicht umfasst mit Vorteil wenigstens 30 bzw. 50 bzw. 70 bzw. 90 Gew.-% Polyolefin bzw. Polypropylen. Die innere Barriereschicht und/oder die äußere Barriereschicht weist/weisen bevorzugt neben dem Polyolefin bzw. dem Polypropylen ein Adhäsionsadditiv auf. Beispielsweise ist das Adhäsionsadditiv Maleinsäureanhydrid.

Gemäß einer sehr bevorzugten Ausführungsform ist die Trägerschicht zwischen der inneren Barriereschicht und der äußeren Barriereschicht angeordnet. Es ist bevorzugt, dass die innere Barriereschicht innerhalb der Trägerschicht angeordnet ist und vorzugsweise an der Trägerschicht anliegt. Es ist von Vorteil, dass die innere Barriereschicht außerhalb der inneren Schicht angeordnet ist und vorzugsweise an der inneren Schicht anliegt. Es ist bevorzugt, dass die äußere Barriereschicht außerhalb der Trägerschicht angeordnet ist und vorzugsweise an der Trägerschicht anliegt. Es ist vorteilhaft, dass die äußere Barriereschicht innerhalb der äußeren Schicht angeordnet ist und vorzugsweise an der äußeren Schicht anliegt. Dies dient dem beidseitigen Schutz der Trägerschicht vor Wasser. Das Adhäsionsadditiv ermöglicht eine gute Haftung der beiden Barriereschichten an der Trägerschicht, der inneren Schicht und/oder der äußeren Schicht und verringert die Zahl der erforderlichen Schichten, weil keine separaten Haftvermittlerschichten benötigt werden.

Mit Vorteil beläuft sich die Schichtdicke der inneren Barriereschicht auf wenigstens 0,07 bzw. 0,09 bzw. 0,12 bzw. 0,15 mm. Es ist bevorzugt, dass die Schichtdicke der inneren Barriereschicht höchstens 0,5 bzw. 0,4 bzw. 0,3 mm beträgt. Mit Vorteil beläuft sich die Schichtdicke der äußeren Barriereschicht auf wenigstens 0,05 bzw. 0,07 bzw. 0,09 mm. Es ist bevorzugt, dass die Schichtdicke der äußeren Barriereschicht höchstens 0,5 bzw. 0,4 bzw. 0,3 bzw. 0,2 mm beträgt.

Das Rohr kann eine Haftvermittlerschicht umfassen, wobei die Haftvermittlerschicht bevorzugt ein Polyolefin und weiter vorzugsweise ein Polypropylen umfasst. Mit Vorteil weist die Haftvermittlerschicht ein Adhäsionsadditiv auf. Dies bewirkt eine bessere Adhäsion an der inneren Schicht/äußeren Schicht/Trägerschicht/Barriereschicht, als diese Schichten zueinander hätten und wirkt damit der Delamination entgegen. Beispielsweise ist das Adhäsionsadditiv Maleinsäureanhydrid. Es ist möglich, dass die Haftvermittlerschicht zwischen der inneren Schicht einerseits und der äußeren Schicht bzw. Trägerschicht andererseits angeordnet ist. Es ist möglich, dass die Haftvermittlerschicht zwischen der inneren Schicht einerseits und der Barriereschicht andererseits befindlich ist. Es ist möglich, dass die Haftvermittlerschicht zwischen der äußeren Schicht bzw. Trägerschicht einerseits und der Barriereschicht andererseits angeordnet ist. Es ist bevorzugt, dass die Haftvermittlerschicht an der Barriereschicht anliegt. Vorzugsweise liegt die Haftvermittlerschicht an der Trägerschicht an. Es ist bevorzugt, dass die Haftvermittlerschicht an der inneren Schicht anliegt. Gemäß einer Ausführungsform umfasst das Rohr bzw. die Rohrwand zwei Haftvermittlerschichten. Vorzugsweise umschließen die beiden Haftvermittlerschichten die Barriereschicht. Vorzugsweise liegen beide Haftvermittlerschichten an der Barriereschicht an. Es ist bevorzugt, dass die innere der beiden Haftvermittlerschichten an der inneren Schicht anliegt. Mit Vorteil liegt die äußere der beiden Haftvermittlerschichten an der Trägerschicht an. Die Haftvermittlerschicht bzw. die Haftvermittlerschichten sind besonders dann von Vorteil, wenn diese ein Polyamid mit einem Polyolefin verbinden sollen. Die Haftvermittlerschicht bzw. die Haftvermittlerschichten weisen eine Schichtdicke von höchstens 0,3 bzw. 0,2 bzw. 0,15 bzw. 0,1 mm auf.

Mit Vorteil weist das Rohr einen lichten Innendurchmesser **ID** von wenigstens 3,0 bzw. 4,0 bzw. 5,0 mm auf. Dies bewirkt einen ausreichenden Medientransport. Zweckmäßigerweise beläuft sich der lichte Innendurchmesser **ID** des Rohrs auf höchstens 30 bzw. 20 bzw. 15 mm. Anderenfalls würde das Rohr zu voluminös. Es ist bevorzugt, dass die Rohrwand eine Stärke S von wenigstens 0,6 bzw. 0,7 bzw. 0,8 mm aufweist. Hierdurch wird das Rohr bzw. die Rohrwand ausreichend druckfest. Es ist bevorzugt, dass die Rohrwand eine Stärke von höchstens 3,0 bzw. 2,5 bzw. 2,0 bzw. 1,5 mm besitzt. Anderenfalls würde zu viel Material verbraucht.

Vorzugsweise umfasst das Rohr in axialer Richtung einen Verbindungsabschnitt und/oder einen Hauptabschnitt. Dies dient der Optimierung der Strömungsverhältnisse durch Bereitstellung unterschiedlicher Rohrabschnitte mit insbesondere unterschiedlichen lichten Innendurchmessern in axialer Richtung. Der Verbindungsabschnitt weist vorzugsweise einen größeren lichten Innendurchmesser (kleinster Innendurchmesser) als der Hauptabschnitt auf. Es ist möglich, dass der Hauptabschnitt gewellt ausgebildet ist. Der Begriff "gewellt" meint beispielsweise sinus-, rechteck- oder sägezahnförmige Rohrwände im Längsschnitt. Es ist möglich, dass zwischen dem Hauptabschnitt und dem Verbindungsabschnitt ein Zwischenabschnitt angeordnet ist. Der Zwischenabschnitt weist bevorzugt einen kleineren lichten Innendurchmesser als der Verbindungsabschnitt auf. Der Zwischenabschnitt kann insbesondere nicht-gewellt ausgebildet sein. Der Verbindungsabschnitt ist vorzugsweise für die Aufnahme eines Stutzens ausgebildet. Durch das Einführen des Stutzens in den Verbindungsabschnitt wird erreicht, dass der lichte Innendurchmesser des Stutzens in etwa dem lichten Innendurchmesser des Hauptabschnitts entspricht. Im Ergebnis werden weitgehend gleichbleibende lichte Innendurchmesser im Rohr erzielt und Druckverluste minimiert.

Die eingangs genannte Aufgabe wird gelöst durch die Verwendung eines erfindungsgemäßen Rohrs zum Transport einer Reinigungsflüssigkeit, insbesondere eines Rohrs gemäß einem der obigen Aspekte, wobei die Reinigungsflüssigkeit vorzugsweise Wasser aufweist, wobei die Reinigungsflüssigkeit bevorzugt eine Wirkkomponente, weiter bevorzugt ein Lösungsmittel und noch weiter bevorzugt einen Alkohol umfasst. Die Reinigungsflüssigkeit ist vorzugsweise Bestandteil eines ADAS in einem Fahrzeug.

Nachfolgend wird die Erfindung anhand von fünf erfindungsgemäßen Ausführungsbeispielen und mithilfe von sechs Figuren erläutert. Es zeigen
- Fig. 1: ein perspektivisch dargestelltes Rohr eines ersten Ausführungsbeispiels der Erfindung,
- Fig. 2: ein perspektivisch dargestelltes Rohr eines zweiten Ausführungsbeispiels der Erfindung,
- Fig. 3: ein perspektivisch dargestelltes Rohr eines dritten Ausführungsbeispiels der Erfindung,
- Fig. 4: ein perspektivisch dargestelltes Rohr eines vierten Ausführungsbeispiels der Erfindung,
- Fig. 5: ein perspektivisch dargestelltes Rohr eines fünften Ausführungsbeispiels der Erfindung und
- Fig. 6: einen Längsschnitt entlang eines axialen Abschnitts von wenigstens einem der Ausführungsbeispiele der Figuren 1 bis 5.

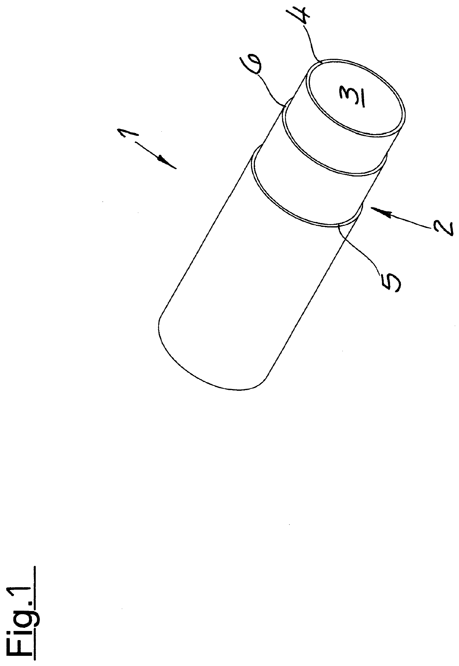

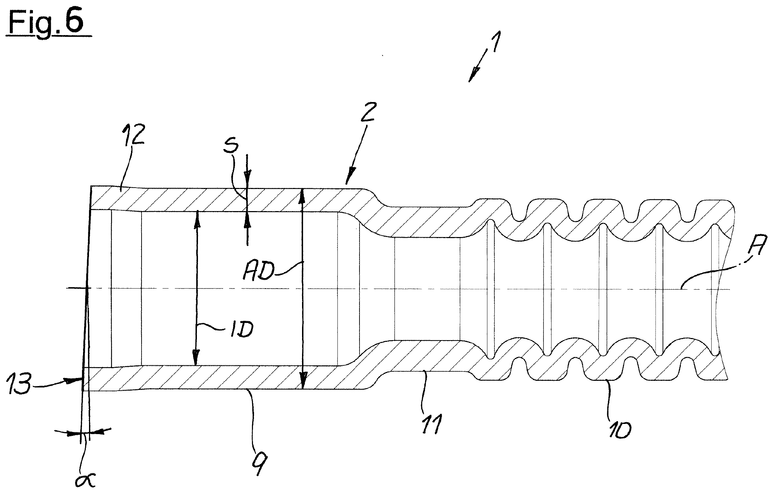

In den Figuren 1 bis 5 ist jeweils ein Rohr 1 mit einer Rohrwand 2 gezeigt, die ein Lumen 3 umschließt. Die Rohrwand 2 ist in den Fällen der Figuren 1 bis 5 mehrschichtig aufgebaut, wobei die verschiedenen Schichten 4, 5, 6, 7 ,8 lediglich der besseren Anschaulichkeit halber zueinander gestuft abgebildet sind. Der Längsschnitt in Fig. 6 mag einen axialen Abschnitt der Rohre 1 aus den Figuren 1 bis 5 zeigen, da der besseren Übersichtlichkeit halber auf die Darstellung der recht dünnen Schichten in Fig. 6 verzichtet wurde. Die Fig. 6 kann daher ein lediglich einschichtiges Rohr oder aber ein mehrschichtiges Rohr - beispielsweise ein Rohr 1 gemäß einer der Figuren 1 bis 5 - darstellen.

Es ist bevorzugt, dass die Rohre 1 zum Transport einer Reinigungsflüssigkeit verwendet werden. Die Reinigungsflüssigkeit umfasst vorzugsweise Wasser. Mit Vorteil weist die Reinigungsflüssigkeit eine Wirkkomponente auf. Die Wirkkomponente ist vorzugsweise ein Lösungsmittel und besonders vorzugsweise ein Alkohol. Es ist möglich, dass der Alkohol Isopropanol oder Ethanol ist. Aufgrund der bevorzugten Wirkkomponente ist die Reinigungsflüssigkeit relativ aggressiv gegenüber den Rohren 1, sodass die Rohre 1 speziell auf die Anwendung des Transports der Reinigungsflüssigkeit abgestimmt sind.

Die Reinigungsflüssigkeit wird mit Vorteil in bzw. an einem Fahrzeug eingesetzt. Es ist bevorzugt, dass die Reinigungsflüssigkeit für eine Reinigung von Sensoren eines Fahrzeugs benutzt wird. Die Sensoren sind vorzugsweise Bestandteil eines *Advanced Driver Assistance System* (ADAS). Das ADAS umfasst mit Vorteil ein Druckluftsystem zum Befreien der Sensoren von der Reinigungsflüssigkeit. Das recht komplexe ADAS ist hier aus Gründen der Übersichtlichkeit nicht dargestellt.

Das Rohr 1 des ersten Ausführungsbeispiels in Fig. 1 umfasst vorzugsweise eine innere Schicht 4, eine äußere Schicht 5 und/oder eine Trägerschicht 6. Die innere Schicht 4 weist mit Vorteil ein Polyamid und insbesondere ein PA11 auf. Die äußere Schicht 5 weist bevorzugt ein Polyamid und insbesondere ein PA11 auf. Es ist von Vorteil, dass die Trägerschicht 6 ein Polyamid und vorzugsweise ein PA6 aufweist. In diesem Ausführungsbeispiel weisen die innere Schicht 4 und die äußere Schicht 5 eine Schichtdicke von jeweils 0,2 mm auf. Demgegenüber beläuft sich die Schichtdicke der Trägerschicht 6 des ersten Ausführungsbeispiels auf 0,6 mm. Das PA6 der Trägerschicht 6 verleiht dem Rohr 1 gute mechanische Eigenschaften und insbesondere Druckfestigkeit sowie Schlagzähigkeit. Das PA11 der inneren Schicht 4 ist sehr auswaschbeständig gegenüber der ADAS-Reinigungsflüssigkeit, sodass die außen nachfolgenden Schichten 6, 5 vor der Reinigungsflüssigkeit geschützt werden. Für diesen Schutz reicht eine Schichtdicke von 0,2 mm aus.

Die äußere Schicht 5 des Rohrs 1 aus Figur 1 ist ebenfalls verhältnismäßig dünn, bietet aber eine gute Druckbeständigkeit und vor allem eine gute chemische Beständigkeit gegenüber verschiedenen Fluiden im Automotive-Bereich. Hierdurch werden die nach innen nachfolgenden Schichten geschützt und damit vor allem die Trägerschicht 6. Die Trägerschicht 6 kann dadurch relativ stark ausgebildet werden, wodurch die Masse des Kunststoffs dieses Rohres auf die Trägerschicht 6 und damit auf das PA 6 entfällt. Hierdurch wird eine entsprechend kostengünstige Mehrschichtstruktur geschaffen. Außerdem sind alle drei Schichten relativ druckbeständig, sodass diese den Volumenänderungen des Wassers in der Reinigungsflüssigkeit gut widerstehen können.

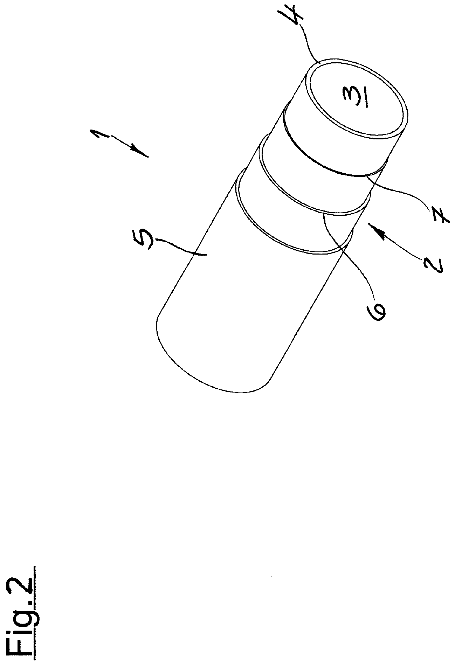

Das Rohr 1 des zweiten Ausführungsbeispiels gemäß Fig. 2 besitzt die gleiche innere Schicht 4 und die gleiche äußere Schicht 5 wie das erste Ausführungsbeispiel. Zudem umfasst das Rohr 1 vorzugsweise eine Trägerschicht 6, wobei die Trägerschicht 6 dieses Ausführungsbeispiels von der äußeren Schicht 5 umschlossen wird und vorzugsweise an der äußeren Schicht 5 anliegt. Die Trägerschicht 6 umfasst bevorzugt ein Polyamid und insbesondere PA6. Allerdings ist die Trägerschicht 6 des zweiten Ausführungsbeispiels mit 0,4 mm Stärke etwas dünner ausgebildet als im ersten Ausführungsbeispiel.

Mit Vorteil umfasst das Rohr 1 des zweiten Ausführungsbeispiels gemäß Figur 2 eine Barriereschicht 7. Die Barriereschicht 7 umfasst vorzugsweise ein Polyolefin und insbesondere ein Polypropylen. Es ist bevorzugt, dass die Barriereschicht 7 ein Adhäsionsadditiv aufweist. Das Adhäsionsadditiv kann beispielsweise Maleinsäureanhydrid sein. Die Barriereschicht 7mag eine Schichtdicke von beispielsweise 0,2 mm aufweisen. Das Polypropylen der Barriereschicht 7 ergänzt das PA 11 der inneren Schicht 4 hinsichtlich der Abschirmung der äußeren nachfolgenden Schichten 6, 5 und schützt insbesondere die hygroskopische Trägerschicht 6 umfassend PA6 vor dem Wasser der Reinigungsflüssigkeit. Aufgrund des Polyolefins bzw. Polypropylens in der Barriereschicht 7 ist das Vorsehen des Adhäsionsadditivs in der Barriereschicht 7 vorteilhaft, weil hierdurch die Barriereschicht 7 besser an der Trägerschicht 6 und an der inneren Schicht 4 haftet.

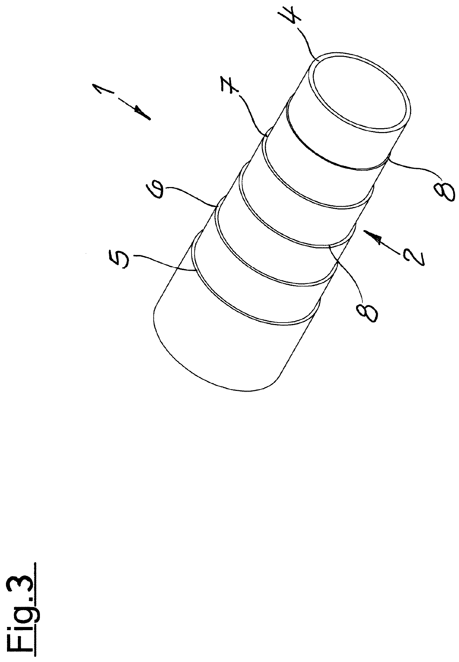

Das Rohr 1 des dritten Ausführungsbeispiels gemäß Fig. 3 besitzt die gleiche äußere Schicht 5 und die gleiche Trägerschicht 6 wie das zweite Ausführungsbeispiel. Das Rohr 1 des dritten Ausführungsbeispiels weist vorzugsweise eine innere Schicht 4 auf, welche ein Polyamid und insbesondere ein PA11 umfasst. Die innere Schicht 4 besitzt in diesem Ausführungsbeispiel eine Schichtdicke von lediglich 0,1 mm. Es ist bevorzugt, dass das Rohr 1 eine Barriereschicht 7 aufweist. Die Barriereschicht 7 umfasst bevorzugt ein Polyolefin und insbesondere ein Polypropylen. Die Barriereschicht 7 mag eine Schichtdicke von 0,1 mm aufweisen.

Das Rohr 1 umfasst nach Figur 3 vorzugsweise eine äußere Haftvermittlerschicht 8, welche vorzugsweise die Barriereschicht 7 umschließt und weiter vorzugsweise an der Barriereschicht 7 anliegt. Mit Vorteil umfasst das Rohr 1 eine innere Haftvermittlerschicht 8, welche von der Barriereschicht 7 vorzugsweise umschlossen wird und weiter vorzugsweise an der Barriereschicht 7 anliegt. Die beiden Haftvermittlerschichten 8 dieses Ausführungsbeispiels weisen bevorzugt ein Adhäsionsadditiv auf, wobei das Adhäsionsadditiv Maleinsäureanhydrid sein kann. Hierdurch haftet der PP-Verbund 8, 7, 8 sowohl an der inneren Schicht 4 als auch an der Trägerschicht 6 gut. Das Polyolefin bzw. Polypropylen der Barriereschicht 7 bzw. der PP-Verbund 8, 7, 8 ergänzt die innere Schicht 4 hinsichtlich der Barrierewirkung gegenüber der Reinigungsflüssigkeit.

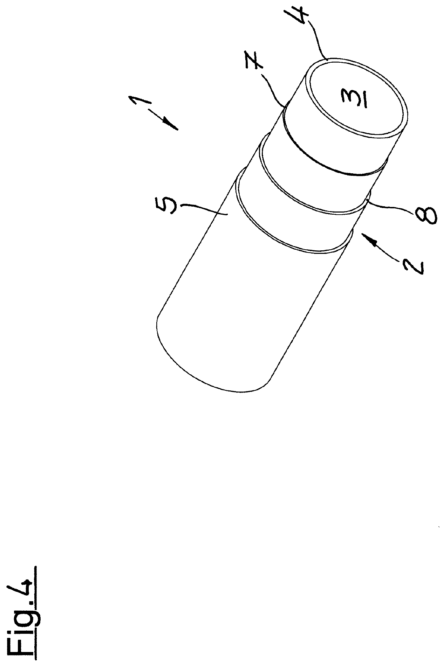

Das Rohr 1 des vierten Ausführungsbeispiels gemäß Fig. 4 weist eine innere Schicht 4 und eine äußere Schicht 5 auf. Die äußere Schicht 5 umfasst mit Vorteil ein Polyamid und insbesondere ein PA11. Die äußere Schicht 5 dieses Ausführungsbeispiels mag eine Schichtdicke von 0,5 mm aufweisen. Die innere Schicht 4 des vierten Ausführungsbeispiels mag ein Polyolefin, vorzugsweise ein Polypropylen und besonders vorzugsweise ein Polypropylen-Elastomerkomponente-Gemisch aufweisen. Die Schichtdicke der inneren Schicht 4 mag 0,2 mm betragen. Es ist bevorzugt, dass das Rohr 1 des vierten Ausführungsbeispiels eine Barriereschicht 7 umfasst. Die Barriereschicht 7 dieses Ausführungsbeispiels weist mit Vorteil ein Polyolefin und vorzugsweise ein Polypropylen auf.. Mit Vorteil umfasst die Barriereschicht 7 ein Maleinsäureanhydrid. Die Barriereschicht 7 mag eine Schichtdicke von 0,2 mm aufweisen.

Es ist bevorzugt, dass das Rohr 1 des vierten Ausführungsbeispiels nach Figur 4 eine Haftvermittlerschicht 8 umfasst. Die Haftvermittlerschicht 8 mag ein Polyolefin und insbesondere ein Polypropylen aufweisen. Es ist bevorzugt, dass die Haftvermittlerschicht 8 des vierten Ausführungsbeispiels ein Adhäsionsadditiv und insbesondere Maleinsäureanhydrid aufweist. Es ist von Vorteil, dass die Haftvermittlerschicht 8 zwischen der äußeren Schicht 5 und der Barriereschicht 7 angeordnet ist und vorzugsweise an der äußeren Schicht 5 und an der Barriereschicht 7 anliegt. Hierdurch haftet der Polypropylen-Verbund 4, 7, 8 gut an der äußeren Schicht 5. Die innere Schicht 4 umfassend das PP-B und die Barriereschicht 7 umfassend PP-R ergänzen einander gut hinsichtlich der Barrierewirkung gegenüber ADAS-Reinigungsflüssigkeiten. Eine ausreichende Druckfestigkeit wird im vierten Ausführungsbeispiel vor allem über die äußere Schicht 5 bereitgestellt. Der Vorteil der relativ dicken äußeren Schicht 5 besteht auch darin, dass PA11 biobasiert hergestellt werden kann.

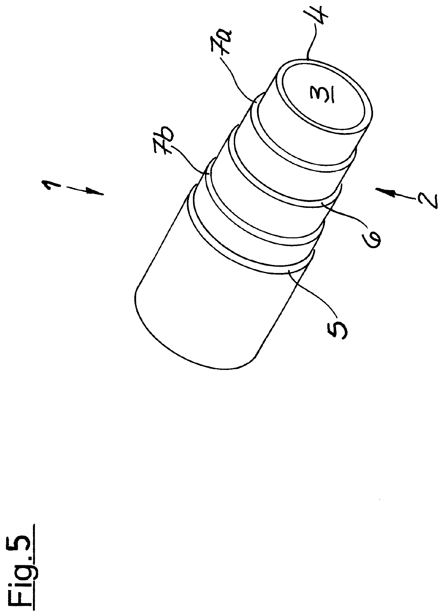

In der Figur 5 ist ein Rohr 1 eines besonders bevorzugten fünften Ausführungsbeispiels gezeigt. Das Rohr 1 umfasst von innen nach außen vorzugsweise eine innere Schicht 4, eine innere Barriereschicht 7a, eine Trägerschicht 6, eine äußere Barriereschicht 7b und/oder eine äußere Schicht 5. Die innere Schicht 4 weist mit Vorteil ein Polyamid - insbesondere ein PA11 - oder ein Polyolefin, vorzugsweise ein Polypropylen, auf. Die innere Schicht 4 weist mit Vorteil - bevorzugt zusätzlich zum Polyolefin bzw. Polypropylen - eine Elastomerkomponente auf.

Die äußere Schicht 5 des fünften Ausführungsbeispiels umfasst bevorzugt ein Polyamid und insbesondere ein PA11. Es ist von Vorteil, dass die Trägerschicht 6 ein Polyamid und vorzugsweise ein PA6 aufweist. Die innere Barriereschicht 7a und/oder die äußere Barriereschicht 7b umfasst vorzugsweise ein Polyolefin und insbesondere ein Polypropylen. Es ist bevorzugt, dass die innere Barriereschicht 7a und/oder die äußere Barriereschicht 7b ein Adhäsionsadditiv aufweist. Das Adhäsionsadditiv kann insbesondere Maleinsäureanhydrid sein.

Das Polyolefin bzw. Polypropylen der äußeren Barriereschicht 7b aus Figur 5 ergänzt das PA 11 der äußeren Schicht 5 hinsichtlich der Abschirmung der Trägerschicht 6 und schützt diese vor dem Wasser der Luftfeuchtigkeit der Umgebung. Aufgrund des Polyolefins bzw. Polypropylens in der äußeren Barriereschicht 7b ist das Vorsehen des Adhäsionsadditivs in der äußeren Barriereschicht 7b vorteilhaft, weil hierdurch die äußere Barriereschicht 7b besser an der Trägerschicht 6 und an der äußeren Schicht 5 haftet. Die äußere Barriereschicht 7b übernimmt daher eine ähnliche Funktion wie die innere Barriereschicht 7a aus dem Ausführungsbeispiel nach Figur 2, betrifft aber die Schutzwirkung nach außen hin.

Die innere Schicht 4 mag im Falle von PA11 eine Schichtdicke von 0,3mm und im Falle von Polypropylen von 0,2mm aufweisen. Die äußere Schicht 5 besitzt im Falle einer inneren Schicht 4 umfassend PA11 vorzugsweise eine Schichtdicke von 0,2mm und im Falle einer inneren Schicht 4 umfassend Polypropylen vorzugsweise eine Schichtdicke von 0,3mm. Die innere Barriereschicht 7a des Ausführungsbeispiels nach Figur 5 mag eine Schichtdicke von 0,2 mm aufweisen. Die Trägerschicht 6 weist mit Vorteil eine Schichtdicke von 0,2mm auf. Die äußere Barriereschicht 7b mag eine Schichtdicke von 0,1 mm aufweisen, was aufgrund des geringeren Einflusses des Wassers von außen bevorzugt ist.

Gemäß Figur 6 weist das Rohr im 1, vorzugsweise wenigstens eines der Rohre 1 der Figuren 1 bis 5, mit Vorteil einen Verbindungsabschnitt 9 und/oder einen Hauptabschnitt 10 auf. Der Hauptabschnitt 10 mag gewellt ausgebildet sein. Es ist bevorzugt, dass das Rohr 1 einen Zwischenabschnitt 11 umfasst, welcher zwischen dem Verbindungsabschnitt 9 und dem Hauptabschnitt 10 angeordnet ist. Mit Vorteil ist ein lichter Innendurchmesser **ID** des Verbindungsabschnitts 9 größer als ein lichter Innendurchmesser **ID** des Hauptabschnitts 10 und/oder des Verbindungsabschnitts 11.

Beispielsweise kann ein in Figur 6 nicht dargestellter Stutzen in den Verbindungsabschnitt 9 eingeführt werden, sodass ein lichter Innendurchmesser des Stutzens im Wesentlichen dem kleinsten Innendurchmesser des Hauptabschnitts 10 entspricht. Hierdurch wird über die axiale Ausdehnung des Rohres 1 hinweg ein etwa gleichbleibender Innendurchmesser bereitgestellt, sodass keine unnötigen Druckverluste auftreten. Die Rohrwand 2 des Rohrs 1 gemäß Figur 6 mag eine Stärke S aufweisen, welche in diesem Ausführungsbeispiel 1,2 mm entspricht. Der Innendurchmesser **ID** im Verbindungsabschnitt 9 mag 8 mm betragen, sodass sich der Außendurchmesser im Verbindungsabschnitt 9 auf 10,4 mm beläuft.

Das Rohr 1 kann gemäß Figur 6 einen Einführabschnitt 12 aufweisen. Der Einführabschnitt 12 mag sich zu einer Stirnwand 13 des Rohrs 1 hin radial aufweiten. Der Einführabschnitt 12 ist vorzugsweise zwischen dem Verbindungsabschnitt 9 und der Stirnwand 13 angeordnet. Die Aufweitung des Außendurchmessers AD durch den Einführabschnitt 12 mag gegenüber dem Verbindungsabschnitt 9 beispielsweise 0,1 mm betragen. Die Stirnwand 13 des Rohrs 1 entsteht typischerweise durch einen Schneidevorgang, mit welchem das Rohr 1 auf eine gewünschte Länge abgelängt wird. Die Stirnwand 13 mag schräg ausgebildet sein und insbesondere im Längsschnitt von einer rein radialen Ausrichtung abweichen und einen Schnittwinkel α > 0 erzeugen. Der Schnittwinkel α mag sich beispielsweise auf 2° belaufen.

### Bezugszeichenliste

- 1: Rohr
- 2: Rohrwand
- 3: Lumen
- 4: innere Schicht
- 5: äußere Schicht
- 6: Trägerschicht
- 7: Barriereschicht
- 7a: Innere Barriereschicht
- 7b: Äußere Barriereschicht
- 8: Haftvermittlerschicht
- 9: Verbindungsabschnitt
- 10: Hauptabschnitt
- 11: Zwischenabschnitt
- 12: Einführabschnitt
- 13: Stirnwand
- A: Längachse
- ID: Innendurchmesser
- AD: Außendurchmesser
- S: Stärke der Rohrwand 2
- α: Schnittwinkel

## Patentansprüche

1. Rohr (1) zur Führung einer Reinigungsflüssigkeit, wobei das Rohr (1) eine Rohrwand (2) aufweist, wobei die Rohrwand (2) ein Lumen (3) umschließt,
**dadurch gekennzeichnet, dass**
die Rohrwand (2) ein Polyamid und/oder ein Polyolefin umfasst.

2. Rohr (1) nach Anspruch 1, wobei die Rohrwand (2) eine innere Schicht (4) umfasst, wobei vorzugsweise die innere Schicht (4) das Polyamid bzw. das Polyolefin der Rohrwand (2) aufweist.

3. Rohr (1) nach Anspruch 1 oder 2, wobei das Polyamid der Rohrwand (2) bzw. der inneren Schicht (4) ein aliphatisches Polyamid und insbesondere PA11 ist.

4. Rohr (1) nach wenigstens einem der Ansprüche 1 bis 3, wobei das Polyolefin der Rohrwand (2) bzw. der inneren Schicht (4) ein Polypropylen ist.

5. Rohr (1) nach wenigstens einem der Ansprüche 1 bis 4, wobei das Polyolefin bzw. Polypropylen der Rohrwand (2) bzw. der inneren Schicht (4) mit einer Elastomerkomponente gemischt ist.

6. Rohr (1) nach wenigstens einem der Ansprüche 1 bis 5, wobei die Rohrwand (2) eine äußere Schicht (5) umfasst, wobei die äußere Schicht (5) bevorzugt ein Polyamid, vorzugsweise ein aliphatisches Polyamid und weiter vorzugsweise PA11 umfasst.

7. Rohr (1) nach wenigstens einem der Ansprüche 1 bis 6, wobei das Rohr (1) eine Trägerschicht (6) aufweist, wobei die Trägerschicht (6) bevorzugt ein Polyamid, weiter bevorzugt ein aliphatisches Polyamid und insbesondere ein PA6 umfasst.

8. Rohr (1) nach wenigstens einem der Ansprüche 1 bis 7, wobei das Rohr (1) bzw. die Rohrwand (2) eine Barriereschicht (7) aufweist, wobei die Barriereschicht (7) bevorzugt ein Polyolefin und vorzugsweise ein Polypropylen umfasst, wobei bevorzugt ist, dass die Barriereschicht (7) Maleinsäureanhydrid aufweist.

9. Rohr (1) nach wenigstens einem der Ansprüche 1 bis 8, wobei das Rohr (1) bzw. die Rohrwand (2) eine innere Barriereschicht (7a) und eine äußere Barriereschicht (7b) umfasst, wobei die Trägerschicht (6) vorzugsweise zwischen der inneren Barriereschicht (7a) und der äußeren Barriereschicht (7b) angeordnet ist.

10. Verwendung eines Rohrs (1) gemäß einem der Ansprüche 1 bis 9 zum Transport einer Reinigungsflüssigkeit, wobei die Reinigungsflüssigkeit vorzugsweise Wasser aufweist, wobei die Reinigungsflüssigkeit bevorzugt eine Wirkkomponente, weiter bevorzugt ein Lösungsmittel und noch weiter bevorzugt einen Alkohol umfasst.
